# EUROPÄISCHE PATENTSCHRIFT

(11) **EP 4 466 425 B1**
(45) Veröffentlichungstag und Bekanntmachung des Hinweises auf die Patenterteilung: **25.11.2026**
(21) Anmeldenummer: 22847416.9
(22) Anmeldetag: 09.12.2022
(51) Int. Cl.: E04F 21/24, H02P 6/08

(54) **ANTRIEB FÜR EINE ESTRICHGLÄTTMASCHINE**
DRIVE FOR A SCREED-SMOOTHING MACHINE
ENTRAÎNEMENT POUR UNE LISSEUSE DE CHAPE

(30) Priorität: 17.01.2022 AT 500172022
(43) Veröffentlichungstag der Anmeldung: 27.11.2024
(73) Patentinhaber: Pet Austria GmbH, 4653 Eberstalzell (AT)
(72) Erfinder: ZIEGELBÄCK, Herbert, 4653 Eberstalzell (AT); ZIEGELBÄCK, Daniel, 4653 Eberstalzell (AT)
(74) Vertreter: Harms, Dirk
(86) Internationale Anmeldenummer: PCT/EP2022/085166
(87) Internationale Veröffentlichungsnummer: WO 2023/134932

(56) Entgegenhaltungen:
- DE-A1- 1 683 168
- JP-A- S63 261 063
- US-A1- 2005 254 896
- US-A1- 2021 180 340
- US-B2- 7 652 438

## Beschreibung

Die Erfindung betrifft einen Antrieb für eine Vorrichtung zum Glätten von zähflüssigem Beton nach dem Oberbegriff des Anspruches 1.

Der Beton kann beispielsweise und somit nicht einschränkend Estrich sein. Mit der erfindungsgemäßen Vorrichtung kann in Anlehnung an ähnliche, nach dem Stand bekannte Glättmaschinen der zähflüssig aufgebrachte Beton während seines Erstarrungsvorganges in eine Ebene geglättet werden. Die erfindungsgemäße Vorrichtung umfasst ähnlich wie eine Glättmaschine nach dem Stand der Technik zumindest eine Scheibe, welche Scheibe an der Oberfläche des flüssigen Betons mit einem zu der Oberfläche des Betons im Wesentlichen parallelen Bewegungsvektor rotativ bewegt wird. Es können auch mehrere rotierende Scheiben eingesetzt werden. Derartige Glättungsvorgänge sind nach dem Stand der Technik bekannt und bilden die Grundlage der Verwendung der im Folgenden offenbarten Vorrichtung.

Die Vorrichtung umfasst als Antrieb einen Elektromotor, welcher Elektromotor einen Akku zur Energieversorgung und eine Steuerungseinheit zur Steuerung der Betriebsparameter des Elektromotors umfasst. Der Elektromotor treibt die zumindest eine Scheibe über eine Antriebsachse an.

Es kann mittels der Steuerungseinheit die Drehzahl des Elektromotors gesteuert werden. Die Steuerungseinheit erlaubt die Vorgabe einer vorgegebenen Umdrehungszahl des Elektromotors durch einen Benutzer und die Steuerung der tatsächlichen Umdrehungszahl des Elektromotors.

US5102258 offenbart eine Vorrichtung zum Estrichglätten, wobei in US5102258 weder explizit noch implizit ableitbar eine Stromversorgung durch einen Akku offenbart ist. Es wird in US5102258, Spalte 1, Zeile 38ff eine Drehgeschwindigkeit der Scheiben von 75 bis 250 Umdrehungen pro Minute angegeben. Dies scheint eine optimale Drehgeschwindigkeit der Scheiben hinsichtlich der Reibung und des zu erzielenden Glättungsergebnisses zu sein. Es findet sich in US5102258 kein Hinweis auf eine Änderung oder Begrenzung der Änderungsrate der Drehgeschwindigkeit der Scheiben oder des Motors während einer Startphase.

Es findet sich in CA2664221 kein Hinweis auf eine nummerische Angabe einer Änderungsrate einer Drehgeschwindigkeit der Scheiben einer Vorrichtung zum Glätten von Estrich. Es ist in CA2664221 nicht explizit ein Akku zur Stromversorgung erwähnt.

Es findet sich in US200821976[0022] lediglich der Hinweis, dass der Antrieb ein drehzahlgesteuerter Elektromotor sein kann. Die Figurenbeschreibung in US200821976[0024] erwähnt einen Treibstofftank ("fuel tank 12"). Der Motor ist über die Stellung der Haltevorrichtung drehzahlgeregelt. Es findet sich in US200821976 kein expliziter Hinweis auf die Verwendung eines Akkus als Energiespeicher. Weiters findet sich in US200821976 kein Hinweis auf eine nummerische Angabe einer Änderungsrate der Drehzahl beim Starten des Motors.

US2020318367A1 offenbart auch keine Änderungsrate einer Drehzahl eines Elektromotors, welcher Elektromotor an einem Akku angeschlossen ist.

EP1529898A1[0015] erwähnt explizit einen Verbrennungsmotor. Es findet sich in EP1529898 A1 keine nummerische Angabe einer Änderungsrate für eine Drehzahl eines Elektromotors, welcher über einen Akku versorgt wird.

EP887489A1 offenbart eine Wechselvorrichtung zum Wechseln der Scheiben, welche Wechselvorrichtung auf der Verwendung von Klebstoff basiert.

DE1683168A1 offenbart ein System zum Anbinden von Glättscheiben an einer Antriebsachse, wobei DE1683168A1 jedoch kein Hebelsystem hierzu offenbart. DE102017214119A1 (Anmeldering Robert Bosch GmbH) offenbart eine Schnellspannvorrichtung für eine tragbare Werkzeugmaschine.

Die Familie zu DE102004020982A1, welches im Register zu DE102017214119A1 als Stand der Technik genannt ist, umfasst auch das europäische Patent EP1737616B1.

Die Familie zu DE102012004458A1, welches im Register zu DE102017214119A1 als Stand der Technik genannt ist, umfasst auch die internationale Patentanmeldung WO2013131676A2. WO2013131676A2 offenbart ein selbstspannendes System, welches System so ausgelegt ist, dass ein von der Axialrichtung einer Spindel abweichende Kraft eine Befestigungskraft in Axialrichtung der Spindel erzeugt. Die Patentfamilie zu DE202013006901U1, welches im Register zu DE102017214119A1 als Stand der Technik genannt ist, umfasst das europäische Patent EP3027361B1.

Die Dokumente US2005254896, US2020263443 und DE202013006901U1 offenbaren keine Vorrichtungen zum Glätten von zähflüssigem Beton mit akkubetriebenen Elektromotoren, die bei einer Änderung der Umdrehungszahl die tatsächliche Umdrehungszahl des Elektromotors über eine bestimmte Zeitspanne mit einer Änderung von 1000-2000 U/min pro Sekunde ändert.

US20210180340 offenbart die Änderung der Drehzahl durch eine Steuerungseinheit nach einer Eingabe einer geänderten Drehzahl.

Die oben angeführten Vorrichtungen umfassen teilweise einen Elektromotor zum Antrieb der Scheiben. Die Energieversorgung der Elektromotoren erfolgt anzunehmender Weise über ein Stromkabel. Im Unterschied hierzu umfasst die erfindungsgemäße Vorrichtung jedoch einen Akku zur Energieversorgung, wie dies oben explizit erwähnt ist.

Das Vorsehen eines Akkus als Energiequelle mit begrenzter Leistung zieht besondere Anforderungen an die Steuerung des Elektromotors mit sich. Beim Antrieb der zumindest einen Scheibe ist zum einen die Reibung zwischen der Scheibe und dem zähflüssigem Beton in einer für den Benutzer annehmbaren Zeitspanne zu überwinden. Zum anderen ist auf einen sparsamen Umgang mit der im Akku gespeicherten und begrenzten Energie zu achten.

Die hieraus ableitbare zu lösende technische Aufgabe wird durch eine besondere Steuerung des Elektromotors gelöst. Erfindungsgemäß wird die technische Aufgabe durch den Anspruch 1 gelöst.

Erfindungsgemäß zeichnet sich die technische Lösung inter alia dadurch aus, dass die Steuerungseinheit zur Begrenzung der Energieentnahme aus dem Akku bei einer Änderung der vorgegebenen Umdrehungszahl die tatsächliche Umdrehungszahl des Elektromotors über eine Zeitspanne inkrementell oder kontinuierlich oder einer mathematischen Funktion folgend mit einer Änderung von 1000-2000 U/min pro Sekunde verändert.

Der Elektromotor weist zu einem Zeitpunkt t1 eine erste Drehzahl auf, d.h. die Antriebsachse des Elektromotors rotiert zu einem ersten Zeitpunkt t1 mit einer ersten Drehzahl.

Die erste Drehzahl kann zu dem ersten Zeitpunkt Null sein. Der Elektromotor kann zu dem ersten Zeitpunkt im Stillstand sein. Die vom Elektroantrieb rotativ angetriebene Scheibe und der zähflüssige Beton unterliegt einem Haftreibungsverbund.

Damit der Elektromotor zu einem zweiten Zeitpunkt t2 eine zweite Drehzahl aufweist, welche zweite Drehzahl von der ersten Drehzahl unterschiedlich ist, muss die Drehzahl des Elektromotors in einer Zeitspanne verändert werden. Bei dem erwähnten Beispiel wird die Drehzahl von einem Wert Null (erste Drehzahl) zu einem Wert größer Null (zweite Drehzahl) erhöht.

Diese Erhöhung der Drehzahl von einem Stillstand der Scheibe zu einer rotativen Bewegung der Scheibe bedingt eine Überwindung der zwischen der Scheibe und dem zähflüssigen Beton wirkenden Haftreibung. Die Überwindung der Haftreibung ist unter Verweis auf die gängige Lehre ein energieaufwendiger Vorgang, weshalb der Erfinder Grenzen über eine Änderung der Drehzahl pro Zeiteinheit definiert.

In Analogie hierzu bedingt eine Erhöhung einer ersten Drehzahl größer Null zu einer zweiten Drehzahl die Überwindung der Gleitreibung zwischen der Scheibe und der Oberfläche des zähflüssigen Betons. Die vom Erfinder gesetzten Grenzen einer Änderung der Drehzahl erweisen sich auch hier als vorteilhaft.

Die vom Erfinder gesetzten Grenzen für eine Änderung der Drehzahl kann als eine Optimierung zwischen der Anforderung eines sparsamen Umganges mit der in dem Akku gespeicherten Energie und der Anforderung einer möglichst kurzen oder für den Benutzer annehmbaren Zeitspanne der Änderung der Drehzahl angesehen werden. Die vom Erfinder genannten Grenzen haben die technische Wirkung, die aus dem Akku entnommene Energie zu begrenzen. Hierdurch kann unterbunden werden, dass die im Akku gespeicherte Energie im Wesentlichen ausschließlich zum Starten der Rotationsbewegung der Scheibe verbraucht wird.

Die angegebenen Grenzen stellen eine Optimierung zwischen dem erforderlichen zusätzlichen Energieaufwand und der Dauer der Zeitspanne dar. Unter dem zusätzlichen Energieaufwand wird jener Energieaufwand verstanden, um die erste Drehzahl zu erhöhen.

Die angegebenen Grenzen einer Änderungsrate der Drehzahl hat auf die Steuerung des Elektromotors eine ähnliche Wirkung wie eine Begrenzung eines vom Elektromotor aufgebrachten Drehmomentes. Es ist jedoch die angegebene Änderungsrate der Drehzahl des Elektromotors durch einfachere Mittel messbar und steuerbar.

Es zähflüssiger Estrich oder Beton weist zu einer rotierenden Scheibe aus Metall in etwa stets den gleichen Haftreibwert und Gleitreibwert auf. Eine Vorrichtung zum Glätten von zähflüssigem Beton oder Estrich zeichnet sich weiter dadurch aus, dass eine unveränderliche Kraft auf den zähflüssigen Beton oder Estrich während des Glättvorganges aufgebracht wird. Aus diesem Grund ist die Bestimmung des Drehmomentes ein unnötiger Aufwand, da die zwischen der zumindest einen Scheibe und dem zählflüssigen Beton oder Estrich wirkende Reibungskraft ohnehin im Wesentlichen konstant ist.

Die hier aufgezeigte Lösung betrifft möglicherweise die Veränderung einer Drehzahl gleich Null eines stillstehenden Elektromotors und einer stillstehenden Scheibe.

Die hier aufgezeigte Lösung betrifft möglicherweise die Veränderung der Drehzahl eines rotierenden Elektromotors und einer rotierenden Scheibe.

Die erwähnte Veränderung der Drehzahl kann beispielsweise in Stufen und somit inkrementell erfolgen.

Die erwähnte Veränderung der Drehzahl kann einer mathematischen Funktion folgend erfolgen. Eine mögliche, einer mathematischen Funktion folgende Veränderung der Drehzahl ist eine lineare und somit kontinuierliche Veränderung der Drehzahl. Die Drehzahl kann auch an einen Sinusverlauf angelehnt verändert werden.

Nach der gängigen Lehre ist die Gleitreibung von der Relativgeschwindigkeit an der Reibungsfläche abhängig. Im vorliegenden Fall ist die Gleitreibung von der Relativgeschwindigkeit zwischen der Scheibe und dem zähflüssigen Beton abhängig. Die mathematische Funktion kann diese mit der Relativgeschwindigkeit veränderliche Gleitreibung berücksichtigen. Die mathematische Funktion kann eine Veränderung der Drehzahl beschreiben, sodass bei einem im Wesentlichen konstanten Energieeintrag die Drehzahl verändert wird.

Der erfindungsgemäße Antrieb kann sich dadurch auszeichnen, dass
die Änderung der Umdrehungszahl 1500 U/min/sec beträgt.

Der erfindungsgemäße Antrieb kann sich dadurch auszeichnen, dass
die maximale Umdrehungszahl des Elektromotors 3300 U/min und die maximale Umdrehungszahl der Scheibe 165 U/min beträgt.

Die Vorrichtung umfassend den erfindungsgemäßen Antrieb kann ein zwischen einer Antriebsachse des Elektromotors und einer die Scheibe antreibende Scheibenachse geschaltetes Getriebe umfassen. Das Getriebe kann ein Übersetzung 3300:165=20:1 aufweisen.

Die genannte Drehzahl der Scheibe ist eine in Hinblick auf den erforderlichen Energieeintrag, die auftretende Gleitreibung und den Arbeitsfortschritt gewählte Drehzahl. Das angegebene Verhältnis der Getriebeübersetzung wird auch in Hinblick auf die erwähnten Parameter gewählt.

Die hier offenbarte erfindungsgemäße Vorrichtung betrifft auch eine lösbare Befestigungsvorrichtung der Scheibe an der Antriebsachse. Es ist auch denkbar, dass die hier beschriebene Befestigungsvorrichtung unabhängig von den sonstigen Merkmalen des erfindungsgemäßen Antriebes wie beispielsweise die Steuerungseinrichtung ausgeführt wird. Die Erfindung wird aber durch die Ansprüche definiert.

Der erfindungsgemäße Antrieb kann sich dadurch auszeichnen, dass
die zumindest eine Scheibe an der Antriebsachse mittels einer lösbaren Arretiervorrichtung angebracht ist, welche Arretiervorrichtung Arretierhebel umfasst, welcher Arretierhebel an seinem einem Ende an der Antriebsachse an einem Anlenkungspunkt angelenkt ist, welcher Arrierthebel ein freies Ende zur Aufnahme der Scheibe umfasst,
welcher Arretierhebel von einer die Scheibe beziehungsweise die Scheiben klemmend haltenden geschlossenen Stellung in eine die Scheibe beziehungsweise die Scheiben freigebenden offenen Stellung mittels eines Hebelwerkes stellbar sind, wobei der Arretierhebel in der geschlossenen Stellung mit seiner Längsseite einen Vorsprung in einer Scheibe kontaktiert.

Eine Bewegung des Arretierhebels kann in der geschlossenen, die zumindest eine Scheibe klemmend haltenden Stellung mittels einer Sperrvorrichtung nach dem Stand der Technik gesperrt sein. Der Arretierhebel, welcher die Scheibe mit seinem freien Ende aufnimmt, ist dazu geeignet, eine hohe Klemmkraft auf die Scheibe aufzubringen.

Der Arretierhebel erstreckt sich radial von der Antriebsachse und im Wesentlichen parallel oder geneigt zu einer Scheibenoberfläche.

Die Scheibenoberfläche umfasst einen Vorsprung, welchen Vorsprung der Arretierhebel mit seiner Längsseite kontaktiert. Auf diese Weise kann das Drehmoment von der Antriebsachse über den Hebel und den Vorsprung auf die Scheibe aufgebracht werden. Der Hebel kann in seiner geöffneten Stellung den Vorsprung nicht und somit ausschließlich in seiner geschlossenen Stellung kontaktieren, sodass die Scheibe selbst bei einem Verkeilen von Hebel und Vorsprung leicht entnommen werden kann.

Der erfindungsgemäße Antrieb kann sich dadurch auszeichnen, dass
der Arretierhebel mit einem Betätigungshebel starr verbunden gekoppelt ist,
welcher Betätigungshebel an dem Anlenkungspunkt angelenkt ist.

Es sind der Arretierhebel und der Betätigungshebel in einer zueinander starren Stellung um den Anlenkungspunkt drehbar gelagert. Durch die drehende Bewegung von Arretierhebel und Betätigungshebel um den Anlenkungspunkt kann die den Arretierhebel und den Betätigungshebel umfassende Arretiervorrichtung von einer geöffneten Stellung in eine geschlossene Stellung gebracht werden.

Der erfindungsgemäße Antrieb kann sich dadurch auszeichnen, dass
zwei Arretierhebel und zwei Betätigungshebel einen Scherenhebel ausbilden,
welcher Scherenhebel an den freien Enden der Betätigungshebel jeweils ein Langloch umfasst,
in welchem Langloch ein sich durch beide Betätigungshebel erstreckende Betätigungsachse bewegbar ist.

Durch ein Bewegen der Betätigungsachse in dem Langloch wird die Arretiervorrichtung von einer geschlossenen Stellung in eine geöffnete Stellung und umgekehrt gebracht. Diese Bewegung der Betätigungsachse zeichnet sich dadurch aus, dass eine hohe Klemmkraft aufgebracht werden kann.

Die hier offenbarte Erfindung betrifft auch ein Verfahren zur Steuerung eines Antriebes einer Vorrichtung zum Glätten von zähflüssigem Beton nach Anspruch 7.

Die Vorrichtung umfasst zumindest eine Scheibe, welche Scheibe rotativ zu einer Oberfläche des Betons mit einem parallel zu der Oberfläche des Betons gerichteten Bewegungsvektor rotativ bewegt wird.

Der Antrieb umfasst einen Elektromotor mit einer Antriebsachse, welche Antriebsachse mit einer die Scheiben antreibende Scheibenachse gekoppelt ist. Die Energieversorgung des Elektromotors erfolgt über einen Akku.

Der Antrieb umfasst weiters eine Steuerungseinheit, über welche Steuerungseinheit die Betriebsparameter des Elektroantriebes wie beispielsweise die Drehzahl der Antriebsachse oder die Drehzahl des Elektromotors gesteuert werden kann. Die Steuerungseinheit erlaubt die Eingabe einer vorgegebenen Umdrehungsanzahl des Elektromotors und die Ausgabe einer tatsächlichen Umdrehungszahl des Elektromotors.

Der Antrieb ist so aufgebaut, dass der Elektromotor die Scheibe antreibt.

Es ist die oben angeführte Aufgabenstellung für die erfindungsgemäße Vorrichtung als auch Aufgabenstellung für das erfindungsgemäße Verfahren anzuwenden.

Die erfindungsgemäße Lösung wird durch den Anspruch 7 erreicht.

Erfindungsgemäß wird dies dadurch erreicht, dass eine Änderung der tatsächlichen Umdrehungsanzahl des Elektromotors um 1000-2000 U/min pro Sekunde in einer Zeitspanne inkrementell oder kontinuierlich oder einer mathematischen Funktion folgend erfolgt.

Das erfindungsgemäße Verfahren kann sich dadurch auszeichnen, dass
die Änderung der tatsächlichen Umdrehungszahl des Elektromotors mit 1500 U/min/sec begrenzt wird.

Die Erfindung wird anhand der folgenden, in den Figuren dargestellten Ausführungsformen ergänzend erläutert:
Fig. 1 zeigt ein Diagramm über den Drehzahlverlaufes bei Anwendung des erfindungsgemäßen Verfahrens.
Fig. 2 zeigt ein Schnittbild einer Ausführungsform der Arretiervorrichtung in der geöffneten Stellung.
Fig. 3 zeigt ein Schnittbild der in Fig. 2 gezeigten Ausführungsform der Arretiervorrichtung in einer geschlossenen Stellung.

Die in den Figuren gezeigten Ausführungsformen zeigen lediglich mögliche Ausführungsformen, wobei an dieser Stelle bemerkt sei, dass die Erfindung nicht auf diese speziell dargestellten Ausführungsvarianten derselben eingeschränkt ist, sondern auch Kombinationen der einzelnen Ausführungsvarianten untereinander und eine Kombination einer Ausführungsform mit der oben angeführten allgemeinen Beschreibung möglich sind. Diese weiteren möglichen Kombinationen müssen nicht explizit erwähnt sein, da diese weiteren möglichen Kombinationen aufgrund der Lehre zum technischen Handeln durch gegenständliche Erfindung im Können des auf diesem technischen Gebiet tätigen Fachmannes liegen.

Der Schutzbereich ist aber immer durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsformen können für sich eigenständige erfinderische Lösungen darstellen, wobei die vorliegende Erfindung aber durch die Ansprüche definiert wird. Die den eigenständigen erfinderischen Lösungen zugrundeliegende Aufgabe kann der Beschreibung entnommen werden.

In den Figuren sind die folgenden Elemente durch die vorangestellten Bezugszeichen gekennzeichnet:
- 1: (frei)
- 2: (frei)
- 3: (frei)
- 4: (frei)
- 5: Arretierhebel
- 6: Arretierhebel
- 7: Anlenkungspunkt
- 8: angelenktes Ende Arretierhebel
- 9: angelenktes Ende Arretierhebel
- 10: freies Ende Arretierhebel
- 11: freies Ende Arretierhebel
- 12: Haltevorrichtung Scheibe
- 13: Betätigungshebel
- 14: Betätigungshebel
- 15: freies Ende Betätigungshebel
- 16: freies Ende Betätigungshebel
- 17: Langloch
- 18: Langloch
- 19: Langlochachse Langloch
- 20: Langlochachse Langloch
- 21: Betätigungsachse
- 22: Vorsprung Arretierhebel
- 23: Vorsprung Arretierhebel
- 24: Bohrung in Haltevorrichtung
- 25: Unterseite Haltevorrichtung
- 26: Eingriffselement
- 27: polygonaler Ausschnitt
- 28: Erstreckungsachse
- 29: (frei)
- 30: Anlenkungsachse
- 31: Aufsatzplatte
- 32: Bohrung in Aufsatzplatte
- 33: Antrieb
- 34: Scheibe
- 35: Hebel
- 36: Griff Hebel
- 37: Steuerungshebel
- 38: Tragehebel
- 39: Sperrelement
- 40: Tragegriff

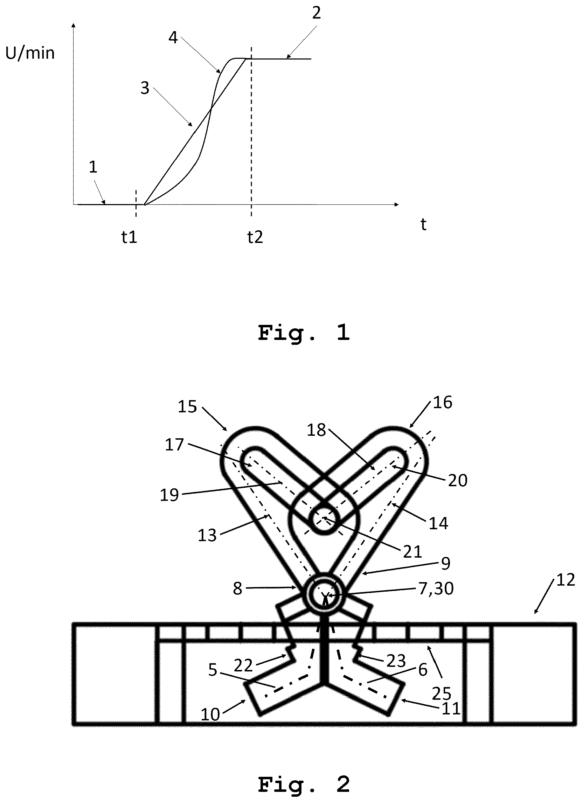

Die Figur 1 zeigt ein Diagramm, in welchem Diagramm auf der Ordinate (y-Achse) die Drehzahl des Elektromotors oder der Antriebsachse aufgetragen ist. Es sind im Diagramm keine Werte angegeben; dieses Diagramm dient ausschließlich der Veranschaulichung der Größenbeziehungen der Werte.

Die Abszisse (x-Achse) ist eine Zeitachse.

Das Diagramm der Figur 1 dient der Veranschaulichung des erfindungsgemäßen Verfahrens und der Funktionsweise der erfindungsgemäßen Vorrichtung, insbesondere der Steuervorrichtung.

Das erfindungsgemäße Verfahren dient der Steuerung eines Antriebes einer Vorrichtung zum Glätten von zähflüssigem Beton. Die im Folgenden beschriebene Steuerung des Verfahrens hat den technischen Effekt, die durch den Betrieb des Motors während einer Änderung der Drehzahl des Motors vom Akku entnommene Energiemenge zu begrenzen. Es kann hierdurch die erforderliche Kapazität und somit die Größe des Akkus klein gehalten werden. Es kann unterbunden werden, dass beim Beschleunigen der Scheibe, insbesondere beim Beschleunigen der Scheibe aus dem Stillstand der der Großteil der im Akku gespeicherten Energie aufgewendet wird.

Die Vorrichtung umfasst zumindest eine Scheibe, welche Scheibe rotativ zu einer Oberfläche des Betons mit einem parallel zu der Oberfläche des Betons gerichteten Bewegungsvektor rotativ bewegt wird.

Der Antrieb umfasst einen Elektromotor, einen Akku und eine Steuerungseinheit, wobei der Elektromotor die Scheibe antreibt.

Es ist in dem Diagramm der Figur 1 zu dem Zeitpunkt t1 eine erste Drehzahl 1 des Elektromotors oder der Antriebsachse des Elektromotors oder der Scheibe oder einer Scheibenachse zum Antrieb der Scheibe eingetragen. Die Figur 1 betrifft den Sonderfall, dass zu dem ersten Zeitpunkt t1 die Drehzahl Null beträgt. Die oben erwähnten Elemente verharren im Stillstand. Der Fachmann kann die aus der Figur 1 und der Beschreibung dieser ableitbaren Lehre auch auf eine von Null unterschiedliche Drehzahl zum Zeitpunkt t1 anwenden.

Die Steuerungseinheit erlaubt die Eingabe einer vorgegebenen Umdrehungsanzahl des Elektromotors. Die Eingabe einer vorgegebenen Umdrehungszahl kann im vermutlich einfachsten Fall so erfolgen, dass die Vorrichtung in Betrieb genommen wird und hierdurch eine vorgegebene Umdrehungsanzahl eingegeben wird. Die Eingabe der Umdrehungsanzahl ist somit nicht auf eine nummerische Eingabe beschränkt.

Die Steuerungseinheit kann auch eine nummerische Eingabe der Umdrehungsanzahl erlauben. Der Anwender kann beispielsweise eine Drehzahl in Abhängigkeit der Eigenschaften des zu glättenden Betons eingeben.

Die Steuerungseinheit erlaubt die Ausgabe einer tatsächlichen Umdrehungszahl des Elektromotors.

Die Eingabe einer Drehzahl, welche Drehzahl von der tatsächlichen Drehzahl des Elektromotors unterschiedlich ist, impliziert eine erforderliche Änderung der tatsächlichen Umdrehungsanzahl des Elektromotors. Das erfindungsgemäße Verfahren sieht vor, dass die Drehzahl des Elektromotors um 1000-2000 U/min in einer eine Sekunde andauernden Zeitspanne und somit pro Sekunde zur Begrenzung der Energieentnahme aus dem Akku verändert wird.

Es wird sohin - unter Bezugnahme auf das Diagramm der Figur 1 - die Drehzahl von dem Wert der ersten Drehzahl 1 auf den Wert der zweiten Drehzahl 2 angehoben. Die Änderungsrate pro Sekunde der Drehzahl beträgt 1000-2000 U/min. In einer Sekunde wird die Drehzahl um 1000-2000 U/min verändert. Im Fall der Figur 1 ist die Änderung der Drehzahl ein Anheben der Drehzahl.

Die Änderung der Drehzahl kann beispielsweise einer linearen Funktion 3 folgend durchgeführt werden.

Die Änderung der Drehzahl kann beispielsweise einer mathematischen Funktion folgend durchgeführt werden, welche mathematische Funktion 4 zum ersten Zeitpunkt t1 und zum /oder zweiten Zeitpunkt t2 eine horizontale Tangente aufweist.

Es ist auch denkbar, dass die Änderung der Drehzahl inkrementell und somit stufenweise erfolgt.

Die oben angeführte Änderung der Drehzahl mit 1000-2000 U/min pro Sekunde ist eine Optimierung hinsichtlich der gering zu haltenden Energiezufuhr (oder Energieentnahme aus dem Akku) und einer für den Anwender akzeptablen Dauer der Zeitspanne zur Änderung der Drehzahl.

Bei einer halbtechnischen Vorrichtung wurde die Änderung der tatsächlichen Umdrehungszahl des Elektromotors mit 1500 U/min pro Sekunde begrenzt wird.

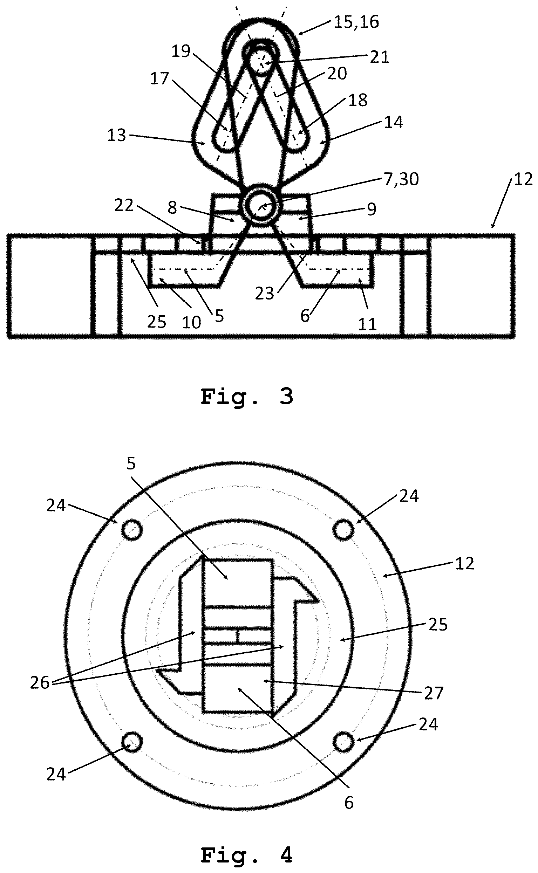

Figur 2 zeigt ein vertikales Schnittbild einer Ausführungsform einer Arretiervorrichtung in der geöffneten Stellung. Figur 3 zeigt ein vertikales Schnittbild der in Figur 2 gezeigten Ausführungsform in der geschlossenen Stellung.

Es ist die Aufgabe der Arretiervorrichtung, die Scheibe gegebenenfalls über eine auf der Scheibe angebrachte Befestigungsvorrichtung lösbar an der Antriebsachse zu befestigen, sodass eine Rotation der Achse eine Rotation der Scheibe hervorruft. Es wird insbesondere anhand der Figur 2 bis 6 die lösbare Befestigung der Scheibe an der Achse diskutiert.

Es wird in der Figurenbeschreibung nicht zwischen einer Antriebsachse und einer Scheibenachse gemäß der Definition im allgemeinen Beschreibung unterschieden.

Die Arretiervorrichtung umfasst einen Arrtierhebel 5, 6, welcher Arretierhebel 5, 6 an jeweils seinem einem Ende 8, 9 an der in Figur 2 nicht dargestellten Antriebsachse an einem Anlenkungspunkt 7 angelenkt ist. Der Anlenkungspunkt 7 kann beispielsweise durch eine Anlenkungsachse 30 (siehe nachstehende Erläuterung) ausgebildet sein, welche Anlenkungsachse 30 in einem Winkel von 90 Grad zu der Längserstreckungsachse der Antriebsachse angeordnet ist. Die in Figur 2 und Figur 3 dargestellte Ausführungsform umfasst eine Anlenkungsachse 30, welche Anlenkungsachse 30 sich normal zu der Bildebene der Figur 2 und der Figur 3 erstreckt. Die Anlenkungsachse 30 kann auch die Aufgabe haben, das über die Antriebsachse aufgebrachte Drehmoment in die Arretierhebel 5, 6 zu übertragen.

Die Arrtierhebel 5, 6 umfassen in freies Ende 10, 11 zur Aufnahme der in der Figur 2 und in der Figur 3 nicht eingetragenen Scheibe. Die Figur 2 zeigt ein treppenförmig ausgebildete freie Enden 10, 11 mit jeweils einem Vorsprung 22, 23, welche Vorsprünge 22, 23 für die Herstellung eines Eingriffes mit einer Haltevorrichtung 12 auf der Scheibe oder einer auf der Scheibe angeordnete Haltevorrichtung ausgebildet sind.

Es ist an jeweils einem Arretierhebel 5, 6 ein Betätigungshebel 13, 14 starr angeschlossen. Die Betätigungshebel 13, 14 sind direkt oder indirekt über den Arretierhebel 5, 6 um den Anlenkungspunkt 7 drehbar gelagert. Eine Drehbewegung eines Betätigungshebels 13, 14 bewirkt stets eine Bewegung des an dem jeweiligen Betätigungshebel 13, 14 starr angeschlossenen Arretierhebels 5, 6.

Der sich zwischen einem Arretierhebel 5, 6 und einem an dem jeweiligem Arretierhebel 5, 6 angeschlossenen Betätigungshebel 13, 14 erstreckende Winkel kann sich zufolge einer elastischen Verformung im starren Anschließungsbereich zwischen den Hebeln 5, 6, 13, 14 verändern. Hierdurch kann eine Vorspannungswirkung beim Klemmen der Scheibe oder der Haltevorrichtung 12 mit den Arreterhebeln 5, 6 erreicht werden.

Es ist im Wesentlichen eine Frage der Dimensionierung, ob eine detektierbare elastische Verformung zwischen einem Arretierhebel 5, 6 und einem an dem jeweiligen Arretierhebel 5, 6 angeschlossenen Betätigungshebel 13, 14 zugelassen wird. Die starre Anlenkung eines Betätigungshebels 13, 14 an dem jeweiligen Arretierhebel 5, 6 kann auch so steif gestaltet werden, dass keine elastische Verformung feststellbar oder messbar ist.

Es bilden die Arretierhebel 5, 6 und die Betätigungshebel 13, 14 einen Scherenhebel aus. Die Hebel 5, 6, 13, 14 des Scherenhebels sind um den Anlenkungspunkt 7 drehbar gelagert.

Der Scherenhebel umfasst an den freien Enden 15, 16 der Betätigungshebel 13, 14 jeweils ein Langloch 17, 18. Die Längsachse 19, 20 der Langlöcher 17, 18 erstrecken sich in der geöffneten Stellung der Arretiervorrichtung (siehe Figur 2) und in der geschlossenen Stellung der Arretiervorrichtung (siehe Figur 3) als am Anlenkungspunkt 7 vorbeilaufende geometrische Strahlen. Es erstreckt sich eine Betätigungsachse 21 durch die Langlöcher 17, 18. Die Betätigungsachse 21 ist in einem Winkel von 90° zu den Hebeln 5, 6 und 13, 14 angeordnet. Die Betätigungsachse 21 erstreckt sich in einem rechten Winkel zu der Bildebene der Figur 2 und der Figur 3.

Eine Bewegung der Betätigungsachse 21 in den Langlöchern 17, 18 führt zu einer Bewegung der Hebeln 5, 6 und 13, 14. Hierdurch werden die freien Enden 10, 11 der Arretierhebel 5, 6 gegen die Haltevorrichtung 12 der Scheibe gepresst.

Es ist die Arretiervorrichtung durch eine Bewegung der Betätigungsachse 21 in stets beiden Langlöchern 17, 18 von einer geöffneten Stellung (siehe Figur 2) in eine geschlossene Stellung (siehe Figur 3) überführbar. Die Betätigungsachse 21 ist durch eine Sperrvorrichtung nach dem Stand der Technik in ihrer Bewegung in den Langlöchern 19, 20 sperrbar.

Die Arretiervorrichtung kann ergänzend oder alternativ zu der Sperrvorrichtung eine Feder umfassen, welche Feder in der Figur 2 und in der Figur 3 nicht eingetragen ist. Die Feder erfährt bei einer Bewegung der Arretiervorrichtung von der geschlossenen Stellung in die geöffnete Stellung eine Erhöhung der Vorspannung.

Die Erhöhung der Vorspannung der Feder kann beispielsweise bei einer Anlenkung der Feder mit einem Ende an der Betätigungsachse 21 durch die Bewegung der Betätigungsachse 21 erfolgen.

Eine Erhöhung der Vorspannung der Feder kann beispielsweise bei einer Anlenkung einer Drehfeder an sich zu einander drehenden Hebeln 5, 6, 13, 14 durch die Drehstellung der Hebeln 5, 6, 13, 14 efolgen. Es kann beispielsweise eine Drehfeder an den Betätigungshebeln 13, 14 angelenkt sein, welche Drehfeder bei einer Drehung der Betätigungshebeln 13, 14 von der geschlossenen Stellung in die geöffnete Stellung eine Vorspannung erfährt.

Es ist oben erwähnt, dass die Längsachsen 19, 20 der Langlöcher 17, 20 oder die durch diese Längsachsen 19, 20 verlaufenden geometrischen Strahlen nicht durch den Anlenkungspunkt 7 verlaufen. Hierdurch wird eine Hebelwirkung der Bewegung der Betätigungsachse 21 auf die hierdurch erzwungene Bewegung des Scherenhebels erreicht. Es bilden die Betätigungsachse 21, die Betätigungshebel 13, 14 und die Arretierhebel 5, 6 ein mechanisches Zwangssystem aus.

Die Figur 4 zeigt eine Ansicht der Arretiervorrichtung von unten. Anhand der Figur 4 wird dem Fachmann klar wie, die Übertragung des Drehmomentes von der Antriebsachse auf die Scheibe übertragen wird. Die Figur 4 umfasst keine Darstellung der Antriebsachse und der Scheibe.

Die Figur 4 zeigt die an der Scheibe angeordnete Haltevorrichtung 12. Die Haltevorrichtung 12 umfasst Bohrungen 24, mittels welcher Bohrungen 24 die Haltevorrichtung 12 über Schrauben an der Scheibe lösbar angebracht werden kann. Es wird so ein zur Übertragung eines Drehmomentes geeigneter Verbund zwischen der Haltevorrichtung 12 und der Schreibe hergestellt.

Die weitere Beschreibung betrifft die Herstellung eines zur Übertragung eines Drehmomentes zwischen der Antriebsachse und den Arretierhebeln 5, 6 einerseits und der Haltevorrichtung 12 andererseits.

Die Figur 4 zeigt die Arretierhebeln 5, 6 in ihrer geschlossenen Stellung. Die freien Enden 10, 11 der Arretierhebeln 5, 6 sind gegen die Unterseite 25 der Haltevorrichtung 12 gepresst oder stehen mit dieser in Eingriff. Die Haltevorrichtung 12 umfasst in vorteilhafter Weise eine Ausnehmung zur Ausbildung der Unterseite 25. Die Ebene der Unterseite 25 ist einen Abstand zu der Ebene mit den Bohrungen 24 ausgebildet, sodass die Hebeln 5, 6 den Glättungsvorgang durch die Scheibe nicht stören oder die Scheibe kontaktieren.

Die Figur 4 zeigt die Hebeln 5, 6 in der geschlossenen Stellung. Zusätzlich zu den Hebeln 5, 6 umfasst die Arretiervorrichtung zumindest ein Eingriffselement 26, welches Eingriffselement 26 durch einen entsprechenden Ausschnitt durch die Unterseite 25 geführt ist und mit der Unterseite 25 ausbildenden Platte im Eingriff steht. Das Eingriffselement umfasst einen polygonalen Grundriss zur Übertragung des Drehmomentes in die die Unterseite 25 ausbildende Platte.

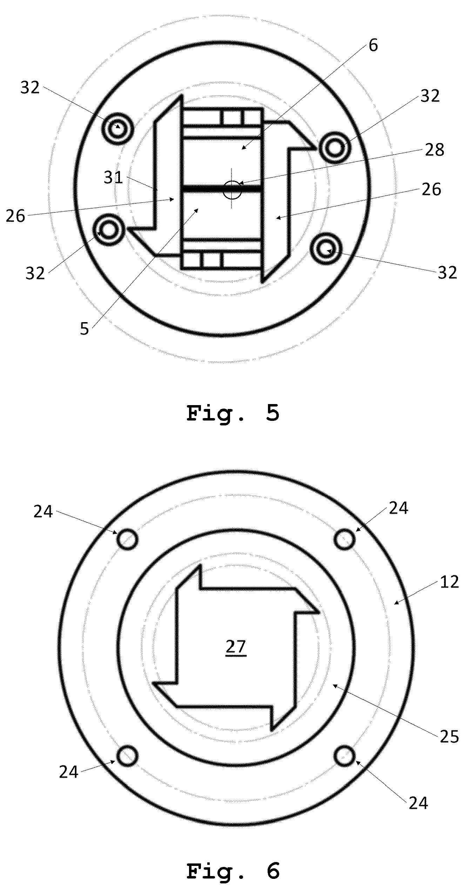

Die Figur 5 zeigt die Arretiervorrichtung. Die Figur 6 zeigt nur die Haltevorrichtung 12.

Die Haltevorrichtung 12 umfasst eine Unterseite 25 mit einem polygonalen Ausschnitt 27 zur Aufnahme des in seinem Grundriss polygonal ausgeformten Eingriffselementes 26 der Arretiervorrichtung. Die Haltevorrichtung 12 umfasst in einer zu der Unterseite 25 beabstandeten Ebene Bohrungen 24 zur lösbaren Befestigung der Haltevorrichtung 12 an der Scheibe.

Die Arretiervorrichtung in Figur 5 umfasst die oben beschriebenen Arretierhebel 5, 6, welche Arretierhebel 5, 6 sich in der in Figur 5 gezeigten Darstellung in einer geöffneten Stellung befinden. Die Arretierhebel 5, 6 sind um die Erstreckungsachse 28 zentrisch angeordnet. Die Arretierhebel 5, 6 sind zwischen zwei Eingriffselmenten 26 angeordnet. Die Längsseiten der Arretierhebel 5, 6 kontaktieren die den Längsseiten zugewandten Oberflächen der Eingriffselemente 26.

Es sind die Eingriffselemente 26 zentrisch um die Längsachse 28 angeordnet.

Es ist in der Figur 5 die den Anlenkungspunkt 7 ausbildenden Anlenkungsachse 30 des oben erwähnten Scherenhebels zu sehen. Die Anlenkungsachse 30 kann sich in einem rechten Winkel zu der Erstreckungsachse einer an einem Elektromotor angeschlossenen Antriebsachse erstrecken. Die Anlenkungsachse 30 kann sich zur Herstellung eines ein Drehmoment übertragenden Verbundes durch die Wand der Antriebsachse erstrecken.

Die Arretiervorrichtung umfasst weiters eine Aufsatzplatte 31 mit Bohrungen 32. Die Arretiervorrichtung kann so auf der Antriebsachse lösbar befestigt werden, wobei Schrauben durch die Bohrungen 32 in die Wand der Antriebsachse geschraubt werden. Bei einem Zusammenführen der Arretiervorrichtung und der Haltevorrichtung 12 wird die die Unterseite 25 ausbildende Platte und die Aufnahmeplatte 31 in einen Kontakt zueinander gebracht. Durch die Arretierhebel 5, 6 können die Aufnahmeplatte 31 und die die Unterseite 25 ausbildende Platte aneinander gepresst werden.

Die Figur 6 zeigt eine Ansicht der Haltevorrichtung 12. Die Haltevorrichtung 12 umfasst Bohrungen 24 zur Aufnahme von Schrauben zur Befestigung der Haltevorrichtung 12 an der nicht dargestellten Scheibe.

Es ist in der Figur 6 die polygonale Ausschnitt 27 gut zu sehen. Wie in Figur 5 dargestellt werden in diese Ausschnitt 27 die Hebel 5, 6 mitsamt dem polygonal ausgeformten Eingriffselementen 26 eingebracht. Die Formen der einzubringenden Elemente 5, 6, 26 und die Form des Ausschnittes 27 sind hierzu passend ausgeführt.

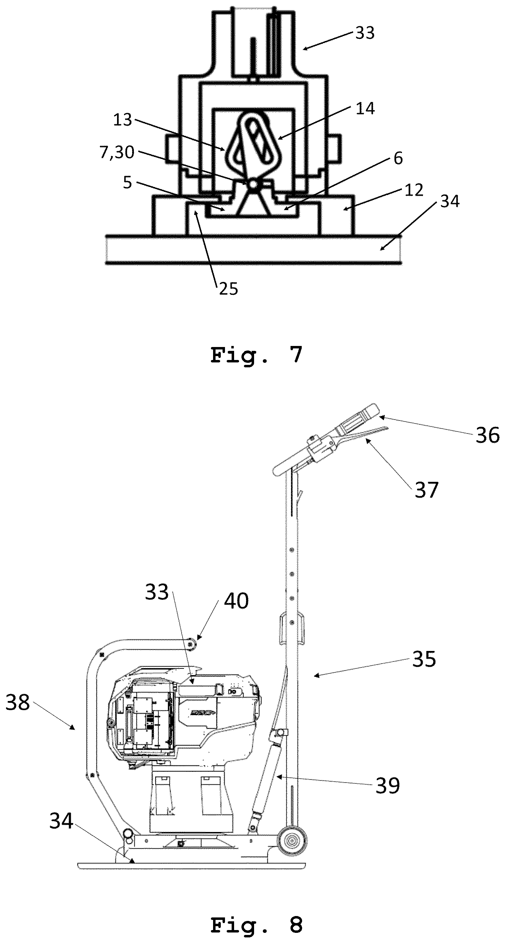

Die Figur 7 zeigt eine mögliche Anordnung der Arretiervorrichtung in einer Achse. Die Arretiervorrichtung befindet sich in der geschlossenen Stellung.

Es ist weiters die Scheibe in der Figur 7 eingetragen. Zur Wahrung der Übersichtlichkeit der Figur 7 sind in der Figur 7 nur die wesentlichen Elemente mit einem Bezugszeichen versehen.

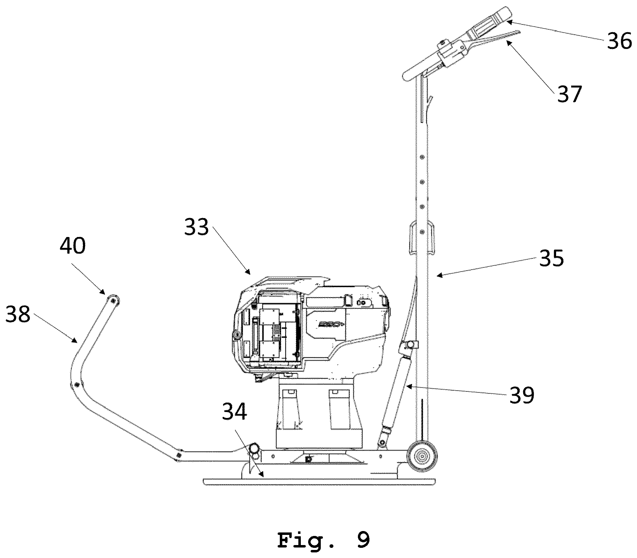

Die Figur 8 und die Figur 9 umfassen eine Seitenansicht einer möglichen Ausführungsform einer einen erfindungsgemäßen Antrieb umfassenden Estrichglättmaschine. Die Estrichglättmaschine umfasst zumindest eine Scheibe, welche Scheibe 34 an der Oberfläche des flüssigen Betons mit einem zu der Oberfläche des Betons im Wesentlichen parallelen Bewegungsvektor rotativ bewegt wird. Die Scheibe 34 wird hierzu durch einen Antrieb 33 gemäß der obigen Beschreibung angetrieben, welcher Antrieb 33 einen Elektromotor, einen Akku und eine Steuerungseinheit umfasst. Der Antrieb 33, im Besonderen der Elektromotor treibt die Scheibe 34 über eine Antriebsachse an. Der Elektromotor als Antrieb 33 wird über eine Steuerungseinheit gesteuert, welche Steuerungseinheit die Vorgabe einer vorgegebenen Umdrehungszahl des Elektromotors durch einen Benutzer und die Steuerung der tatsächlichen Umdrehungszahl des Elektromotors gestattet.

Die Estrichglättmaschine umfasst in der in der Figur 8 und in der Figur 9 dargestellten Ausführungsform einen Hebel 35 zum Führen der Estrichglättmaschine auf dem zu glättenden Beton. Der Hebel 35 erstreckt sich von der Estrichglättmaschine, vorzugsweise von einem zu der Schiebe 34 benachbarten Bereich der Estrichglättmaschine in eine Höhenlage, in welcher Höhenlage ein Benutzer am freien Ende des Hebels 35 vorgesehene Griffe 36 gut greifen kann. Am freien Ende des Griffes 36 ist weiters ein Steuerungshebel 37 angeordnet. Der Steuerungshebel 37 muss für einen Betrieb des Antriebes 33 gezogen werden. Falls der Benutzer den Steuerungshebel 37 nicht anzieht, ist der Antrieb 33 gestoppt.

Der Hebel 35 kann an einem Ende der Estrichglättmaschine angeordnet sein. Der Hebel 35 ist vorzugsweise an der Estrichglättmaschine angelenkt, wobei die Neigung des Hebels 35 durch eine Sperrelement 39 stellbar ist.

An diesem gegenüberliegenden Ende der Estrichglättmaschine ist ein Tragehebel 38 angeordnet. In einer vorteilhaften Weise ist der Tragehebel 38 an einem zu der Scheibe 34 benachbarten Bereich der Estrichglättmaschine angeordnet. In einer besonders vorteilhaften Weise ist der Tragehebel 38 an der Estrichglättmaschine angelenkt, sodass dieser von einer in der Figur 8 gezeigten Verwahrstellung in eine in der Figur 9 Gebrauchsstellung überführbar ist. Der Traghebel 38 kann wie in der Figur 8 und in der Figur 9 dargestellt eine gebogene Form aufweisen, sodass der Tragehebel 38 in einer sich um den Antrieb 33 erstreckenden Form platzsparend verwahrt werden kann. In der Verwahrstellung ist der Tragehebel 38 ein Schutzbügel für den Antrieb 33.

Der Tragehebel 38 kann einen Tragegriff 40 umfassen.

Die Estrichglättmaschine kann durch zwei Personen getragen werden, wobei eine Person die Estrichglättmaschine am Tragehebel 38 und eine Person die Estrichglättmaschine am Heble 35 anhebt.

Der Fachmann erkennt, dass die anhand der Figur 8 und der Figur 9 beschriebenen Anordnung des Traghebels 38 und des Hebels 35 unabhängig von der Antriebsart umsetzbar ist.

## Patentansprüche

1. Antrieb (33) für eine Vorrichtung zum Glätten von zähflüssigem Beton,
welche Vorrichtung eine Scheibe (34) oder mehrere Scheiben umfasst,
welche Scheibe (34) beziehungsweise welche Scheiben an der Oberfläche des flüssigen Betons mit einem zu der Oberfläche des Betons im Wesentlichen parallelen Bewegungsvektor rotativ bewegt werden,
welcher Antrieb (33) einen Elektromotor, einen Akku und eine Steuerungseinheit umfasst,
welcher Elektromotor die Scheibe (34) beziehungsweise die Scheiben über eine Antriebsachse antreibt,
welche Steuerungseinheit die Vorgabe einer vorgegebenen Umdrehungszahl des Elektromotors durch einen Benutzer und die Steuerung der tatsächlichen Umdrehungszahl des Elektromotors gestattet,
**dadurch gekennzeichnet, dass**
eine Eingabe einer von der tatsächlichen Drehzahl des Elektromotors unterschiedliche Drehzahl durch den Benutzer eine Änderung der tatsächlichen Drehzahl durch die Steuerungseinheit impliziert,
wobei die Steuerungseinheit zur Begrenzung der Energieentnahme aus dem Akku bei der Änderung der vorgegebenen Umdrehungszahl die tatsächliche Umdrehungszahl des Elektromotors über eine Zeitspanne inkrementell oder kontinuierlich oder einer mathematischen Funktion folgend mit einer Änderung von 1000-2000 U/min pro Sekunde verändert.

2. Antrieb nach Anspruch 1, **dadurch gekennzeichnet, dass** die Änderung der Umdrehungszahl 1500 U/min/sec beträgt.

3. Antrieb nach einem der Ansprüche 1 bis 2, **dadurch gekennzeichnet, dass**
die maximale Umdrehungszahl des Elektromotors 3300 U/min und die maximale Umdrehungszahl der Scheibe 165 U/min beträgt.

4. Antrieb nach einem der Ansprüche 1 bis 3, **dadurch gekennzeichnet, dass**
die Scheibe beziehungsweise die Scheiben an der Antriebsachse mittels einer lösbaren Arretiervorrichtung angebracht ist,
welche Arretiervorrichtung Arrtierhebel (5, 6) umfasst, welcher Arretierhebel (5, 6) an seinem einem Ende (8, 9) an der Antriebsachse an einem Anlenkungspunkt (7) angelenkt ist,
welcher Arretierhebel (5, 6) ein freies Ende (10, 11) zur Aufnahme der Scheibe umfasst,
welcher Arretierhebel (5, 6) von einer die Scheibe beziehungsweise die Scheiben klemmend haltenden geschlossenen Stellung in eine die Scheibe beziehungsweise die Scheiben freigebenden offenen Stellung mittels eines Hebelwerkes stellbar sind,
wobei der Arretierhebel (5, 6) in der geschlossenen Stellung mit seiner Längsseite einen Vorsprung in einer Scheibe kontaktiert.

5. Antrieb nach Anspruch 4, **dadurch gekennzeichnet, dass** der Arretierhebel (5, 6) mit einem Betätigungshebel (13, 14) starr verbunden gekoppelt ist,
welcher Betätigungshebel (13, 14) an dem Anlenkungspunkt (7) angelenkt ist.

6. Antrieb nach Anspruch 5, **dadurch gekennzeichnet, dass** zwei Arretierhebel (5, 6) und zwei Betätigungshebel (13, 14) einen Scherenhebel ausbilden,
welcher Scherenhebel an den freien Enden (15, 16) der Betätigungshebel (13, 14) jeweils ein Langloch (17, 18) umfasst,
in welchem Langloch (17, 18) ein sich durch beide Betätigungshebel (13, 14) erstreckende Betätigungsachse (21) bewegbar ist.

7. Verfahren zur Steuerung eines Antriebes (33) einer
Vorrichtung zum Glätten von zähflüssigem Beton nach einem der vorhergehenden Ansprüche, welche Vorrichtung eine oder mehrere Scheiben (34) umfasst,
welche Scheibe beziehungsweise welche Scheiben rotativ zu einer Oberfläche des Betons mit einem parallel zu der Oberfläche des Betons gerichteten Bewegungsvektor rotativ bewegt werden,
welcher Antrieb einen Elektromotor, einen Akku und eine Steuerungseinheit umfasst,
welcher Elektromotor die Scheibe beziehungsweise die Scheiben antreibt,
welche Steuerungseinheit die Eingabe einer vorgegebenen Umdrehungsanzahl des Elektromotors und die Ausgabe einer tatsächlichen Umdrehungszahl des Elektromotors erlaubt, **dadurch gekennzeichnet, dass**
eine Änderung der tatsächlichen Umdrehungsanzahl des Elektromotors um 1000-2000 U/min pro Sekunde in einer Zeitspanne inkrementell oder kontinuierlich oder einer mathematischen Funktion folgend erfolgt.

8. Verfahren nach Anspruch 7, **dadurch gekennzeichnet, dass**
die Änderung der tatsächlichen Umdrehungszahl des Elektromotors mit 1500 U/min/sec begrenzt wird.

## Claims

1. Drive (33) for a device for levelling viscous concrete, which device comprises one disc (34) or a plurality of discs,
which disc (34) or discs are rotated on the surface of the liquid concrete with a motion vector substantially parallel to the surface of the concrete,
the drive (33) comprising an electric motor, a rechargeable battery and a control unit,
the electric motor driving the disc (34) or discs via a drive shaft,
the control unit allowing a user to set a predetermined rotational speed for the electric motor and to control the actual rotational speed of the electric motor, **characterised in that**
the user's input of a rotational speed different from the actual rotational speed of the electric motor results in the control unit adjusting the actual rotational speed,
whereby, in order to limit the energy drawn from the battery when the specified rotational speed is changed, the control unit alters the actual rotational speed of the electric motor incrementally or continuously, or in accordance with a mathematical function, over a period of time at a rate of 1000-2000 rpm per second.

2. A drive according to claim 1, **characterised in that** the change in rotational speed is 1500 rpm/sec.

3. A drive according to any one of claims 1 to 2, **characterised in that**
the maximum rotational speed of the electric motor is 3300 rpm and the maximum rotational speed of the disc is 165 rpm.

4. A drive according to any one of claims 1 to 3, **characterised in that**
the disc or discs is/are mounted on the drive shaft by means of a detachable locking device,
which locking device comprises a locking lever (5, 6), which locking lever (5, 6) is articulated at one end (8, 9) to the drive shaft at a pivot point (7), which locking lever (5, 6) comprises a free end (10, 11) for receiving the disc,
which locking lever (5, 6) can be moved by means of a lever mechanism from a closed position, in which the disc or discs are clamped, to an open position, in which the disc or discs are released,
wherein, in the closed position, the locking lever (5, 6) contacts a disc with a projection on its longitudinal side.

5. A drive according to claim 4, **characterised in that** the locking lever (5, 6) is rigidly coupled to an actuating lever (13, 14),
which actuating lever (13, 14) is articulated at the pivot point (7).

6. A drive according to claim 5, **characterised in that** two locking levers (5, 6) and two actuating levers (13, 14) form a scissor lever,
which scissor lever comprises a slotted hole (17, 18), in each of which a drive shaft (21) extending through both actuating levers (13, 14) is movable.

7. A method for controlling a drive (33) of a device for smoothing viscous concrete according to one of the preceding claims,
which device comprises one or more discs (34),
which disc or discs are rotated towards a surface of the concrete with a motion vector directed parallel to the surface of the concrete,
which drive comprises an electric motor, a rechargeable battery and a control unit,
which electric motor drives the disc or discs,
which control unit allows the input of a predetermined number of revolutions of the electric motor and the output of an actual number of revolutions of the electric motor,
**characterised in that**
a change in the actual rotational speed of the electric motor of 1000-2000 rpm per second occurs over a period of time, either incrementally, continuously or in accordance with a mathematical function.

8. The method according to claim 7, **characterised in that** the change in the actual rotational speed of the electric motor is limited to 1500 rpm/sec.

## Revendications

1. Entraînement (33) pour un dispositif destiné à lisser du béton visqueux,
ledit dispositif comprenant un disque (34) ou plusieurs disques,
ledit disque (34) ou lesdits disques étant entraînés en rotation à la surface du béton liquide avec un vecteur de mouvement sensiblement parallèle à la surface du béton,
ledit entraînement (33) comprenant un moteur électrique, une batterie et une unité de commande, ledit moteur électrique entraînant le disque (34) ou les disques par l'intermédiaire d'un axe d'entraînement,
ladite unité de commande permettant à un utilisateur de définir une vitesse de rotation prédéfinie du moteur électrique et de contrôler la vitesse de rotation réelle de celui-ci,
**caractérisé en ce que**
la saisie par l'utilisateur d'une vitesse de rotation différente de la vitesse de rotation réelle du moteur électrique implique une modification de la vitesse de rotation réelle par l'unité de commande,
l'unité de commande, afin de limiter le prélèvement d'énergie de la batterie lors de la modification de la vitesse de rotation prédéfinie, modifiant la vitesse de rotation réelle du moteur électrique sur un intervalle de temps, de manière incrémentielle, continue ou selon une fonction mathématique, avec une variation de 1 000 à 2 000 tr/min par seconde.

2. Entraînement selon la revendication 1, **caractérisé en ce que**
la variation de la vitesse de rotation est de 1 500 tr/min/s.

3. Entraînement selon l'une des revendications 1 à 2, **caractérisé en ce que**
la vitesse de rotation maximale du moteur électrique est de 3 300 tr/min et la vitesse de rotation maximale du disque est de 165 tr/min.

4. Entraînement selon l'une des revendications 1 à 3, **caractérisé en ce que**
le disque ou les disques est/sont fixé(s) à l'essieu moteur au moyen d'un dispositif de blocage amovible, ledit dispositif de blocage comprenant un levier de blocage (5, 6),
ledit levier de blocage (5, 6) étant articulé, à l'une de ses extrémités (8, 9) est articulé sur l'axe d'entraînement en un point d'articulation (7),
ledit levier de blocage (5, 6) comportant une extrémité libre (10, 11) destinée à recevoir le disque,
ledit levier de blocage (5, 6) pouvant être déplacé, au moyen d'un mécanisme à levier, d'une position fermée dans laquelle le ou les disques sont maintenus par serrage vers une position ouverte dans laquelle le ou les disques sont libérés,
le levier de blocage (5, 6) entrant en contact, dans la position fermée, avec une saillie d'un disque par son côté longitudinal.

5. Entraînement selon la revendication 4, **caractérisé en ce que**
le levier de blocage (5, 6) est couplé de manière rigide à un levier d'actionnement (13, 14),
ledit levier d'actionnement (13, 14) étant articulé au point d'articulation (7).

6. Entraînement selon la revendication 5, **caractérisé en ce que**
deux leviers de blocage (5, 6) et deux leviers d'actionnement (13, 14) forment un levier en ciseaux, ledit levier en ciseaux comportant, au niveau des extrémités libres (15, 16) des leviers d'actionnement (13, 14), respectivement un trou oblong (17, 18), dans lequel un axe d'actionnement (21) s'étendant à travers les deux leviers d'actionnement (13, 14) peut se déplacer.

7. Procédé de commande d'un entraînement (33) d'un dispositif destiné à lisser du béton visqueux, selon l'une des revendications précédentes,
ledit dispositif comprenant un ou plusieurs disques (34),
ledit ou lesdits disques étant entraînés en rotation vers une surface du béton avec un vecteur de mouvement orienté parallèlement à la surface du béton,
ledit entraînement comprenant un moteur électrique, une batterie et une unité de commande,
ledit moteur électrique entraînant le disque ou les disques,
ladite unité de commande permettant la saisie d'un nombre de tours prédéfini du moteur électrique et l'affichage d'un nombre de tours réel du moteur électrique,
**caractérisé en ce que**
la variation du nombre de tours réel du moteur électrique s'effectue de 1 000 à 2 000 tr/min par seconde sur un intervalle de temps, de manière incrémentielle, continue ou selon une fonction mathématique.

8. Procédé selon la revendication 7, **caractérisé en ce que** la variation du nombre de tours réel du moteur électrique est limitée à 1 500 tr/min/s.
